(19) Europäisches Patentamt
European Patent Office
Office européen des brevets

(11) **EP 4 510 075 B1**

(12) **FASCICULE DE BREVET EUROPEEN**

(45) Date de publication et mention de la délivrance du brevet:
**22.07.2026 Bulletin 2026/30**

(21) Numéro de dépôt: **24194610.2**

(22) Date de dépôt: **14.08.2024**

(51) Classification Internationale des Brevets (IPC):
**G06T 7/00** *(2017.01)*

(52) Classification Coopérative des Brevets (CPC):
**G06T 7/0004;** G06T 2207/10061; G06T 2207/20081

(54) **PROCÉDÉ ET DISPOSITIF DE TRAITEMENT DE DONNÉES MULTIDIMENSIONNELLES POUR LA LOCALISATION DE DÉFAUTS DANS UN ÉCHANTILLON**

VERFAHREN UND VORRICHTUNG ZUR VERARBEITUNG MEHRDIMENSIONALER DATEN ZUR FEHLERORTUNG IN EINER PROBE

METHOD AND DEVICE FOR MULTIDIMENSIONAL DATA PROCESSING FOR LOCATING DEFECTS IN A SAMPLE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **18.08.2023 FR 2308785**

(43) Date de publication de la demande:
**19.02.2025 Bulletin 2025/08**

(73) Titulaire: **Commissariat à l'Energie Atomique et aux Energies Alternatives**
**75015 Paris (FR)**

(72) Inventeur: **GUEDJ, Cyril**
**38054 GRENOBLE CEDEX 9 (FR)**

(74) Mandataire: **Lavoix**
**2, place d'Estienne d'Orves**
**75441 Paris Cedex 09 (FR)**

(56) Documents cités:
- **NOUAMANE LAANAIT ET AL: "Reconstruction of 3-D Atomic Distortions from Electron Microscopy with Deep Learning", ARXIV.ORG, CORNELL UNIVERSITY LIBRARY, 201 OLIN LIBRARY CORNELL UNIVERSITY ITHACA, NY 14853, 19 February 2019 (2019-02-19), XP081030670**
- **JEFFREY M EDE: "Advances in Electron Microscopy with Deep Learning", ARXIV.ORG, CORNELL UNIVERSITY LIBRARY, 201 OLIN LIBRARY CORNELL UNIVERSITY ITHACA, NY 14853, 4 January 2021 (2021-01-04), XP081852066, DOI: 10.5281/ZENODO.4415407**
- **JACOB MADSEN ET AL: "A deep learning approach to identify local structures in atomic-resolution transmission electron microscopy images", ARXIV.ORG, CORNELL UNIVERSITY LIBRARY, 201 OLIN LIBRARY CORNELL UNIVERSITY ITHACA, NY 14853, 8 February 2018 (2018-02-08), XP081220123, DOI: 10.1002/ ADTS.201800037**

**Description**

La présente invention concerne un procédé et un dispositif de traitement de données multidimensionnelles pour la localisation de défauts dans un échantillon de matériau cristallin, comportant une acquisition d'au moins une image formant un pavé de données d'entrée, la ou chaque image dudit pavé étant représentative d'une partie de l'échantillon observé, ledit pavé de données d'entrée étant représenté dans un espace à N dimensions, N étant supérieur ou égal à deux.

L'invention se situe dans le domaine du traitement de données multidimensionnelles, obtenues par observation d'échantillons composés d'un ou plusieurs matériaux, pour l'analyse de leurs propriétés physiques et de leurs structures.

Plus particulièrement, l'invention trouve des applications dans la localisation de défauts observés dans des matériaux cristallins, par exemple appliquée dans l'inspection de qualité dans une chaîne de production de dispositifs à base de matériaux cristallins.

De manière connue, les cristaux sont généralement composés d'une maille ordonnée, définie par un réseau de Bravais. Ils présentent par définition un diffractogramme discret, c'est-à-dire composé de taches ou boules de diffraction, au sens de l'IUCR (Union Internationale de Cristallographie).

En pratique, des matériaux observés comportant une ou plusieurs espèces cristallines et/ou amorphes peuvent présenter des défauts, i.e. déformations ou irrégularités, qui peuvent induire des contraintes ou dysfonctionnements dans des dispositifs utilisant de tels matériaux, par exemple des courants de fuite dans des transistors.

Par exemple, les déformations de type « dislocation » correspondent à un défaut linéaire d'un cristal obtenu par glissement d'une partie du cristal le long d'un plan. Une dislocation est caractérisée par un vecteur de glissement, également appelé vecteur de Burgers de la dislocation. Les dislocations connues sont des dislocation « vis », des dislocations « coin » ou des dislocations mixtes

Plus généralement, considérant un pavé de données dans un espace à N dimensions, la dislocation est définie par un glissement d'une partie des données le long d'un hyperplan. Il existe d'autre types de défauts induisant des déformations parfois très difficiles à déceler, comme les plus petites fautes d'empilement. Les nombreuses autres sortes de défauts tels que les parois d'antiphase, les macles, les joints de grains sont également susceptibles d'engendrer des déformations locales des matériaux.

Il est utile de disposer d'outils performants pour réaliser l'inspection de matériaux, et détecter la présence éventuelle de tels défauts, et en particulier de dislocations, en phase de calibration ou en phase d'optimisation technologique de divers dispositifs utilisant les matériaux.

L'analyse de propriétés physiques de matériaux par traitement de données de spectres (1D) et d'images (2D) obtenues par microscopie a été développée à cet effet.

Les images et spectres sont par exemple obtenus par microscopie électronique en transmission à haute résolution (HRTEM et HRSTEM et 4D-STEM), microscopie de fluorescence X (HRSTEM-EDX), microscopie de perte d'énergie électronique (HRSTEM-EELS et HRSTEM-VEELS), microscopie électronique en transmission filtrée en énergie (EF-HRTEM, EF-HRSTEM), microscopie à force atomique (AFM), microscopie à effet tunnel (STM), sonde atomique tomographique ou tomographie électronique par exemple. Les images de microscopie obtenues sont des images à résolution atomique, c'est-à-dire de résolution spatiale inférieure ou égale à 2 nanomètres.

Des ensembles de données de spectres et d'images représentatives chacune d'au moins une partie de l'échantillon observé sont obtenues par tout type de caractérisations par microscopie générant un pavé de données à N dimensions (ou données multidimensionnelles), N étant un entier supérieur ou égal à 2, également appelé « datacube ». Ce pavé comporte des gouttes, également appelées taches ou spots, ou « spikes » ou « blobs » en anglais, qui se détachent sur un fond homogène (par exemple des gouttes ou taches claires sur fond homogène sombre). Ces gouttes sont représentatives de caractéristiques structurelles du matériau de l'échantillon observé, par exemple d'un alignement d'atomes le long de la direction d'observation. Le pavé de données peut également contenir du bruit.

Par exemple, s'agissant de l'observation de cristaux, des gouttes disposées selon un motif régulier représentent classiquement le maillage cristallin. En deux dimensions, les gouttes sont également appelées taches. En une dimension, les gouttes sont des points.

Mathématiquement, une goutte est une composante simplement connexe d'un espace topologique discret, au sens de la topologie générale. Cela signifie que tout lacet tracé dans une goutte peut être réduit par homotopie à un point. Physiquement, une goutte représente par exemple le signal électrique produit par les pixels d'un détecteur matriciel suite à l'impact d'une particule (électron, photon, ion, fermions, boson, etc.). La particule est toujours beaucoup plus petite que le pixel, donc la goutte peut toujours se réduire à un point par homotopie, conformément à la définition mathématique de la goutte. Il existe donc un accord précis entre la définition physique et la définition mathématique de la goutte.

Le document « Reconstruction of 3-D Atomic Distortions from Electron Microscopy with Deep Learning" de Nouamane Laanait et al, publié par Cornell University Library, en février 2019, décrit la reconstruction de distorsions atomiques 3D à partir d'images de microscopie électronique, en utilisant l'apprentissage machine profond.

Dans l'état de la technique, on connaît des méthodes de mesure de dislocations dans des matériaux observés par microscopie, en utilisant la transformation de Radon. Une des difficultés est de localiser avec une bonne précision ce type de défauts.

Il existe donc un besoin d'améliorer la précision de localisation des défauts les plus difficiles à déceler, en particulier les dislocations ou les fautes d'empilement notamment, dans des échantillons observés, en particulier les échantillons de matériau cristallin.

A cet effet, l'invention propose, selon un aspect, un procédé de traitement de données multidimensionnelles représentatives d'un échantillon de matériau cristallin pour la localisation de défauts dans ledit échantillon de matériau cristallin, comportant une acquisition d'au moins une image formant un pavé de données d'entrée, la ou chaque image dudit pavé de données d'entrée étant représentative d'une partie dudit l'échantillon, ledit pavé de données d'entrée étant représenté dans un espace à N dimensions, N étant supérieur ou égal à deux, chaque donnée dudit pavé correspondant à un point de l'espace à N dimensions. Ce procédé comporte des étapes de :

- transformation dudit pavé de données d'entrée pour obtenir un pavé de gouttes représentatives d'une structure atomique de l'échantillon observé,
- en au moins un sous-ensemble de points dudit pavé de gouttes,

    ○ calcul d'un tenseur de structure fonction des valeurs de gradients directionnels, autour de chaque point P dudit sous-ensemble du pavé de gouttes,
    ○ calcul d'une ou plusieurs valeurs caractéristiques du tenseur de structure,
    ○ formation d'un tenseur de signature associé au sous-ensemble de points P du pavé de gouttes, le tenseur de signature ayant pour composantes lesdites valeurs caractéristiques de tenseur de structure ;

- obtention d'un pavé de signatures correspondant audit pavé de gouttes, ledit pavé de signatures réunissant les tenseurs de signature associés aux points P dudit pavé de gouttes;
- détection et localisation d'un défaut par application d'une méthode de classification par apprentissage machine audit pavé de signatures.

Avantageusement, l'utilisation de caractéristiques du tenseur de structure permet d'obtenir un jeu de tenseurs de signatures, et par la suite, la détection et la localisation de ces défauts, notamment les dislocations et fautes d'empilement, avec une précision impossible à obtenir avec les méthodes de l'art antérieur.

Le procédé de traitement de données multidimensionnelles pour la localisation de défauts selon l'invention peut également présenter une ou plusieurs des caractéristiques ci-dessous, prises indépendamment ou selon toutes les combinaisons techniquement envisageables.

Les valeurs caractéristiques d'un tenseur de structure sont choisies parmi des gradients dans chaque direction, les valeurs propres du tenseur de structure, l'énergie du tenseur de structure, la cohérence du tenseur de structure, l'orientation du tenseur de structure, l'indice de Harris du tenseur de structure, l'indice de Harris-Laplace du tenseur de structure.

La méthode de classification appliquée est une méthode mise au point par apprentissage machine supervisé, semi-supervisé ou autonome après apprentissage préalable sur des pavés de signatures calculés sur des défauts simulés.

Le voisinage est défini par un nombre de points compris entre la moitié et dix fois la distance médiane entre gouttes voisines.

Le procédé comporte un calcul des valeurs propres de ladite matrice, et une détermination de la valeur propre minimale, de la valeur propre maximale, lesdites valeurs propres minimale et maximale étant mémorisées.

Le procédé comporte en outre un calcul d'énergie, l'énergie étant égale à la somme des valeurs absolues desdites valeurs propres, un calcul de cohérence, la cohérence étant égale à la différence entre la valeur propre maximale et la valeur propre minimale divisée par la somme de la valeur propre maximale et de la valeur propre minimale, lesdites caractéristiques du tenseur de structure comportant la valeur propre minimale, la valeur propre maximale, l'énergie et la cohérence.

Le procédé comporte en outre un calcul d'orientation en fonction du tenseur de structure.

Le procédé comporte en outre un calcul d'indice de Harris et/ou d'indice de Harris-Laplace par application d'un opérateur de calcul sur les valeurs du tenseur de structure.

L'invention concerne également un programme d'ordinateur comportant des instructions logicielles qui, lorsqu'elles sont exécutées par un ordinateur, mettent en œuvre un procédé de traitement de données multidimensionnelles pour la localisation de défauts tel que défini ci-dessus.

L'invention concerne également un dispositif de traitement de données multidimensionnelles représentatives d'un échantillon de matériau cristallin pour la localisation de défaut(s) dans l'échantillon de matériau cristallin, configuré pour acquérir au moins une image de microscopie formant un pavé de données d'entrée, la ou chaque image dudit pavé étant représentative d'une partie de l'échantillon observé, ledit pavé de données d'entrée étant représenté dans un espace à N dimensions, N étant supérieur ou égal à deux, chaque donnée dudit pavé correspondant à un point de l'espace à N dimensions, le dispositif comportant un processeur de calcul configuré pour mettre en œuvre :

- un module de transformation dudit pavé de données d'entrée pour obtenir un pavé de gouttes représentatives d'une structure atomique de l'échantillon observé,
- appliquer, en au moins un sous-ensemble de points dudit pavé de gouttes,

  ◦ un module de calcul d'un tenseur de structure fonction des valeurs de gradients directionnels, autour de chaque point P dudit sous-ensemble du pavé de gouttes,
  ◦ un module de calcul d'une ou plusieurs valeurs caractéristiques du tenseur de structure,
  ◦ un module de formation d'un tenseur de signature associé au sous-ensemble de points P du pavé de gouttes, le tenseur de signature ayant pour composantes lesdites valeurs caractéristiques de tenseur de structure,

- un module d'obtention d'un pavé de signatures correspondant audit pavé de gouttes, ledit pavé de signatures réunissant les tenseurs de signatures associés aux points P dudit pavé de gouttes ;

- un module de détection et localisation d'un défaut par application d'une méthode de classification par apprentissage machine audit pavé de signatures.

L'invention apparaîtra plus clairement à la lecture de la description qui va suivre, donnée uniquement à titre d'exemple non limitatif, et faite en référence aux dessins dans lesquels :

La figure 1 est un schéma-bloc d'un système d'inspection de données multidimensionnelles de microscopie comportant un dispositif de traitement de données multidimensionnelles de microscopie selon un mode de réalisation ;
La figure 2 est un synoptique des principales étapes d'un procédé de traitement de données multidimensionnelles pour la localisation de défauts selon un mode de réalisation ;
La figure 3 est un exemple de pavé de données d'entrée et de pavé de gouttes en deux dimensions ;
La figure 4 illustre des caractéristiques de tenseurs de structure calculées pour le pavé de gouttes de la figure 3.

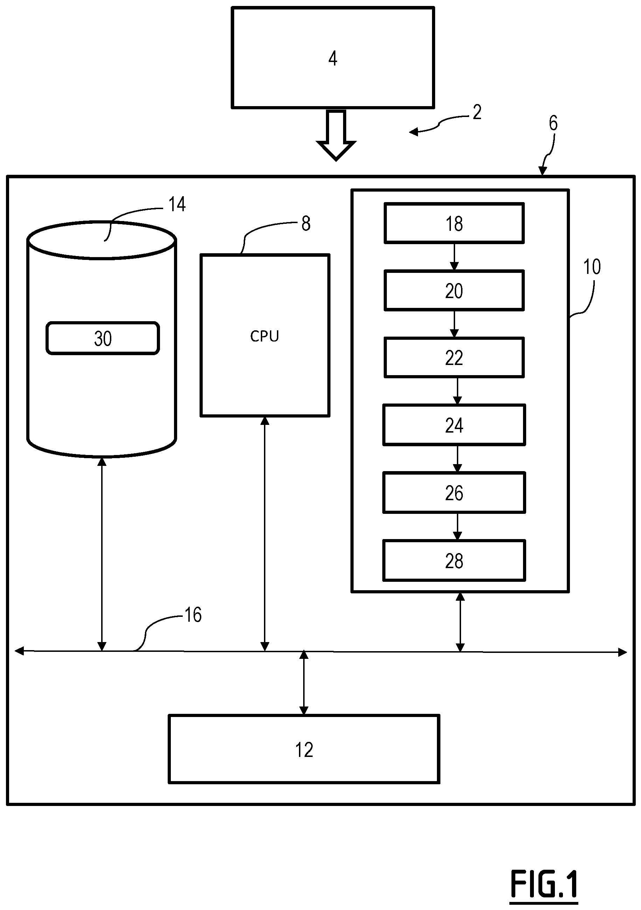

La **figure 1** illustre schématiquement un système de détection et localisation de défauts 2, en particulier de dislocations, dans un échantillon de matériau cristallin à partir de données multidimensionnelles représentatives de l'échantillon, acquises par une machine de caractérisation 4.

Toute technique de microscopie adaptée pour la caractérisation d'un tel échantillon est applicable.

Dans un mode de réalisation, la machine de caractérisation 4 est un microscope électronique en transmission (TEM) qui permet d'acquérir des images d'un échantillon composé d'un ou plusieurs matériaux, comportant par exemple des matériaux cristallins.

Le microscope électronique 4 permet d'acquérir simultanément des images de diffraction électronique, des spectres EELS (pour « Electron Energy Loss Spectroscopy »), des spectres EDX (pour « Energy Dispersive X-Ray Analysis ») des signaux de différents capteurs (BF pour « Bright field », DF pour « Dark field », DPC pour « Differential phase contrast » ou tout autre capteur adapté ou customisé), pour chaque point de l'échantillon en mode de microscopie à balayage appelé mode STEM (pour « Scanning Transmission Electron Microscope »). Un autre mode d'acquisition possible est le mode TEM qui permet d'obtenir une image globale sans avoir à balayer le faisceau d'électrons.

Dans un autre mode de réalisation, la machine de caractérisation 4 est un microscope à force atomique ou un microscope à effet tunnel.

Chaque spectre ou image acquis est représenté sous forme d'image numérique, comportant des points ou pixels, chaque image étant représentative d'au moins une partie de l'échantillon observé.

L'ensemble des spectres et images acquis forme un pavé de données à N dimensions, N étant un entier naturel supérieur ou égal à 2. Un tel pavé de données est également appelé « datacube ».

Dans un mode de réalisation, plusieurs spectres ou images sont acquis dans le temps, montrant une évolution de l'échantillon lors de l'analyse. Dans ce mode de réalisation, le temps est une dimension supplémentaire du pavé de données.

En complément, une autre dimension du pavé de données est la focalisation du microscope, l'énergie des électrons, un angle (de l'échantillon, de collection des électrons, de convergence de électrons), ou tout autre paramètre de réglage du microscope susceptible de varier de manière contrôlée durant la mesure.

Les données incomplètes peuvent éventuellement être extrapolées à partir des valeurs voisines le cas échéant, par exemple pour corriger les éventuelles imperfections rencontrés durant l'acquisition de données. En règle générale les mesures à l'échelle atomique sont très souvent entachées de défauts car un simple bruit acoustique ou électronique peut parfois les perturber.

Dans un pavé de données multidimensionnelles d'un échantillon de structure cristalline, la maille de cristal forme usuellement un réseau périodique de gouttes observables disposées selon un motif régulier qui représente le maillage cristallin régulier.

Les défauts structurels ou irrégularités d'une telle structure forment des gouttes également, mais qui sont par exemple irrégulièrement disposées, et parfois plus petites que les gouttes appartenant au motif régulier du cristal.

Un défaut de type dislocation correspond à un glissement d'une partie du cristal le long d'un plan. En N dimensions, cela correspond à un glissement d'une partie des données le long d'un hyperplan. Les brisures locales de symétrie peuvent conduire à un grand nombre de défauts différents répertoriés dans la littérature.

Comme déjà indiqué ci-dessus, mathématiquement, une goutte est une composante simplement connexe d'un espace topologique discret, au sens de la topologie générale.

Les valeurs des pixels appartenant à une goutte se distinguent d'un fond d'image.

Un pavé de données multidimensionnelles d'un échantillon d'une structure physique, e.g. un matériau cristallin, observée est transmis à un dispositif 6 de traitement de données multidimensionnelles de microscopie pour la localisation de défauts dans l'échantillon observé.

Par exemple, la transmission est effectuée par une liaison filaire ou par liaison sans fil (optique, radio, ou autre).

Le dispositif 6 de traitement est, dans un mode de réalisation, un dispositif électronique programmable, e.g. un ordinateur.

Le dispositif 6 comporte un processeur 8 (CPU ou GPU) associé à une mémoire électronique 10. Optionnellement, le dispositif 6 comporte une interface homme-machine 12, comportant notamment un écran d'affichage de données. En outre le dispositif 6 comporte ou est connecté à une mémoire de stockage 14. Les éléments 8, 10, 12, 14 du dispositif 6 sont adaptés pour communiquer via un bus de communication 16.

Le processeur 8 est configuré pour exécuter des modules 18, 20, 22, 24, 26, 28, mémorisés dans la mémoire électronique 10, pour mettre en œuvre un procédé de traitement de données multidimensionnelles représentatives de l'échantillon observé.

Le module 18 est un module d'obtention de pavé de données multidimensionnelles à traiter, configuré pour obtenir un pavé de données comportant au moins une image d'entrée, à partir d'un pavé de données obtenu par la machine de caractérisation 4.

Par exemple, le module d'obtention 18 est configuré pour obtenir le pavé de données à traiter (ou pavé de données d'entrée) à partir d'une mémoire électronique, où ces données ont été mémorisées après acquisition.

Le module 20 est un module de transformation du pavé d'entrée en pavé de gouttes (ou composantes simplement connexes) représentatives de la structure atomique de l'échantillon observé.

Par exemple, le module 20 met en œuvre un filtrage, une normalisation et un seuillage des données ou une segmentation par apprentissage machine comme décrit ci-après.

Le module 22 est un module de calcul d'un tenseur de structure fonction des valeurs de gradients directionnels, autour de chaque point P d'un sous-ensemble du pavé de gouttes. Le tenseur de structure est calculé en fonction des valeurs de gradients directionnels, chaque direction correspondant à une dimension de l'espace, dans un voisinage des points, le tenseur de structure étant associé à chaque point du sous-ensemble de points.

Par exemple, le sous-ensemble de points choisi contient tous les points P du pavé de gouttes pour lesquels le calcul de tenseur de structure est possible, en fonction de la taille du voisinage autour de chaque point.

Le module 24 est un module de calcul d'une ou plusieurs caractéristiques du tenseur de structure, permettant de former un tenseur de signatures associé au sous-ensemble de points du pavé de goutte traité.

Le module 26 est un module d'obtention d'un pavé de signatures réunissant les tenseurs de signatures associés aux points du pavé de gouttes.

Le module 28 est un module de détection et localisation d'un défaut par application d'une méthode de classification par apprentissage machine au pavé de signatures, supervisé ou semi-supervisé ou autonome après apprentissage sur des pavés de signatures calculés sur des dislocations simulées.

Les paramètres 30 de la méthode de classification, obtenus par apprentissage machine, sont mémorisés, par exemple dans la mémoire électronique de stockage 14.

L'apprentissage machine semi-supervisé ou autonome est appliqué dans une étape préalable d'apprentissage, par un dispositif électronique de calcul du même type, sur des pavés de données simulés, dont les défauts sont également simulés et donc dont les caractéristiques théoriques sont connues. Les caractéristiques de tenseur de structure sont calculées sur des tels pavés de données simulés, de manière à entraîner la méthode de classification, et en particulier obtenir par apprentissage machine (éventuellement de type « deep learning ») les valeurs des paramètres de la méthode à appliquer.

Par exemple, l'apprentissage machine est effectué avec un algorithme de type forêt aléatoire rapide « fast random forest », décrit dans l'article de Leo Breiman (2001). « Random Forests », publié dans Machine Learning.

45(1):5-32.

En variante, d'autres algorithmes de classification par apprentissage machine peuvent être mis en œuvre, par exemple de type Bayesien, ou à base de fonctions, ou à base de règles, ou une combinaison de tels algorithmes, ou à base de toute la palette d'outils utilisés en classification par apprentissage machine.

Selon une autre variante, la méthode de classification choisie met en œuvre un réseau de neurones, entraîné par apprentissage supervisé, par exemple un réseau de neurones convolutif CNN (pour « Convolutional Neural Networks ») ou un apprentissage de type « deep learning ».

Dans un mode de réalisation, les modules 18, 20, 22, 24, 26, 28 sont réalisés chacun sous forme d'un logiciel, et forment un programme d'ordinateur, comportant des instructions logicielles qui, lorsqu'elles sont exécutées par un ordinateur, mettent en œuvre un procédé de traitement de données multidimensionnelles pour la localisation de défauts tel que décrit plus en détail ci-après.

En variante non représentée, les modules 18, 20, 22, 24, 26, 28 sont réalisés chacun sous forme d'un composant logique programmable, tel qu'un FPGA (de l'anglais *Field Programmable Gate Array*), un GPU (processeur graphique) ou un GPGPU (de l'anglais *General-purpose processing on graphics processing*), ou encore sous forme d'un circuit intégré dédié, tel qu'un ASIC (de l'anglais *Application Specific Integrated Circuit*).

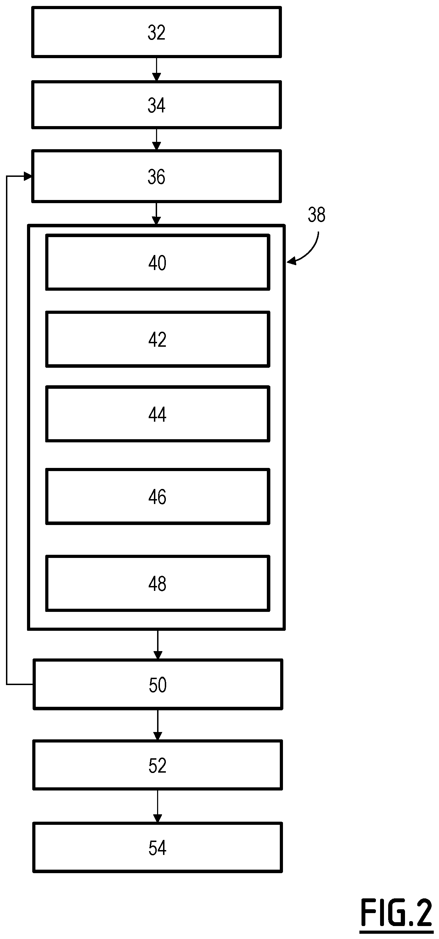

Le logiciel de traitement de données multidimensionnelles pour la localisation de défauts est en outre apte à être enregistré, sous forme de programme d'ordinateur comportant des instructions logicielles, sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, SD, NVRAM, RRAM, PCRAM, NAND 2D, NAND 3D, SLC NAND, MLC NAND, TLC NAND, V-NAND, QLC), une carte magnétique ou une carte optique, un disque SSD. La **figure 2** est un synoptique des principales étapes du procédé de traitement de données multidimensionnelles de microscopie pour la localisation de défaut(s) dans un échantillon de matériau cristallin.

Le procédé comprend une étape 32 d'obtention d'un pavé de données d'entrée à traiter, comportant au moins une image, représentant un échantillon de matériau cristallin.

Le pavé de données comporte des gouttes se détachant d'un fond homogène, par exemple des gouttes claires sur fond sombre en microscopie HRSTEM-HAADF, ou HRTEM, représentatives de motifs réguliers de la maille et de défauts ou irrégularités dans l'échantillon observé.

D'une manière générale, le pavé de données d'entrée est un pavé à N dimensions, N supérieur ou égal à 2.

Les données du pavé sont des valeurs numériques, chaque valeur étant associée à un point dans l'espace à N dimensions. Un tel point est également appelé pixel lorsque N=2. Chaque point a une coordonnée associée dans chaque dimension, en général représentée par un indice.

Dans un mode de réalisation, N=2, le pavé de données d'entrée étant alors une matrice LxW (i.e. L lignes et W colonnes), composée de valeurs de pixels, chaque pixel ayant des coordonnées respectives (x,y), x étant par exemple un indice de ligne et y un indice de colonne.

Il est considéré que le pavé de données d'entrée est homogène, i.e. correspond à un matériau cristallin homogène, ayant une structure homogène.

Optionnellement, si cela n'est pas le cas, un découpage du pavé de données d'entrée en pavés de données d'entrée homogènes est mis en œuvre. Chaque pavé de données d'entrée homogènes comporte des données homogènes selon un critère d'homogénéité relatif à au moins un matériau de l'échantillon observé. Le critère d'homogénéité est une homogénéité de structure, en référence à la similarité des domaines représentatifs. Un tel découpage est par exemple effectué par apprentissage machine, par exemple par segmentation supervisée, semi supervisée ou par classification autonome après apprentissage (par exemple profond).

En général, de préférence, au moins 3 à la puissance N gouttes voisines sont utilisées pour définir la taille d'un domaine représentatif de la structure, où N représente la dimension du pavé de gouttes.

Pour une image, il faut donc au moins G=9 gouttes voisines pour définir un domaine représentatif de la structure. Une composante est dite homogène quand les transformée de Fourier de tous ses domaines représentatifs sont toutes similaires. Pour mémoire, il existe de nombreuses méthodes classiques de quantification mathématique de la similarité entre 2 images. La transformée de Fourier donne une image de l'ordre structurel, similaire à l'ordre cristallin révélé par un cliché de diffraction électronique.

Selon des variantes, le critère d'homogénéité est un critère d'homogénéité de valeurs d'intensité des données et/ou de permittivité diélectrique et/ou de propriétés électromagnétiques, par exemple mesurées in-situ durant l'acquisition du pavé de données. Les mesures VEELS permettent notamment d'obtenir la permittivité diélectrique locale, comme le montre la littérature. Ce critère d'homogénéité structurale ou de propriétés physiques permet donc de réaliser ce partitionnement du datacube en zones d'intérêt.

L'étape 32 est suivie d'une étape 34 de transformation dudit pavé de données d'entrée pour obtenir un pavé de gouttes représentatives d'une structure atomique de l'échantillon observé.

Comme déjà indiqué supra, les gouttes sont des composantes simplement connexes de l'espace topologique discret à N dimensions.

Dans un premier mode de réalisation, l'étape 34 met en œuvre un filtrage du sous-pavé de composante, optionnellement une normalisation, puis une segmentation.

Par exemple, l'étape 34 met en œuvre un filtrage par convolution avec un noyau HBSG (pour « Half Ball Savitzky-Golay ») tel que décrit dans le brevet FR3 118 256. Ce filtrage, par exemple utilise un noyau HBSG carré de taille correspondant à la médiane des distances entre gouttes voisines (ici 21 pixels), avec un lissage d'ordre 2 ou 3, puis une normalisation locale des niveaux de gris. La normalisation locale consiste à diviser l'image par la variance locale, obtenue en calculant la racine carrée de la convolution par un filtre gaussien du carré de l'image. De manière générale, la taille du filtre gaussien utilisé pour calculer la variance locale est idéalement proche de la médiane des distances entre gouttes voisines. .et Enfin une segmentation est opérée, par exemple en appliquant un seuillage adaptatif de Bernsen décrit dans "Dynamic Thresholding of Grey-Level Images", Proc. of the 8th Int. Conf. on Pattern Recognition, 1986, avec un rayon proche de la moitié de la médiane des distances entre gouttes voisines (ici 10 pixels).

Une deuxième variante de segmentation plus précise que la méthode de Bernsen met en œuvre un apprentissage machine comme décrit plus en détail ci-après. L'algorithme d'apprentissage machine permet de distinguer deux classes, respectivement la classe de « gouttes » (ou « spots » en anglais) et la classe de « fond ».

Par exemple, l'apprentissage machine est effectué avec un algorithme de type forêt aléatoire rapide « fast random forest », décrit dans l'article de Leo Breiman (2001). « Random Forests », publié dans Machine Learning. 45(1):5-32).

En variante, d'autres algorithmes de classification par apprentissage machine peuvent être mis en œuvre, par exemple de type Bayesien, ou à base de fonctions, ou à base de règles, ou une combinaison de tels algorithmes, ou à base de toute la palette d'outils utilisés en classification par apprentissage machine tels que le deep learning par exemple.

En règle générale, les gouttes représentent moins de 20 % de l'image, et leur taille est inférieure à 1 nm, après calibration sur les tailles réelles dans l'échantillon. Les simulations des images théoriques permettent de déterminer quelle est la distribution attendue des gouttes dans l'image afin de vérifier que la segmentation est correcte. Une segmentation est correcte si le nombre et la position des gouttes s'approchent des valeurs théoriques attendues au-delà d'un seuil d'incertitude donné.

Optionnellement également, un filtrage de convolution pour combler d'éventuels trous à l'intérieur des gouttes obtenues est mis en œuvre. Par exemple, un filtre tel que décrit dans le brevet publié sous le numéro FR 3 118 256 est mis en œuvre, et/ou un algorithme de type « fill holes » (K.-J. Oh, S. Yea, and Y.-S. Ho, "Hole filling method using depth based inpainting for view synthesis in free viewpoint television and 3- D video," in Proc. Picture Coding Symp., Chicago, IL, May 2009.). A nouveau, l'objectif consiste à s'approcher de la forme théorique idéale, qui est exempte de trous.

Une autre option pour s'approcher encore plus de la distribution théorique des gouttes consiste à réaliser une convolution théorique, c'est-à-dire un masquage du diffractogramme du pavé de gouttes avec un diffractogramme théorique ajusté au mieux sur le diffractogramme expérimental. Cet ajustement de la théorie par rapport à l'expérience consiste à varier les paramètres théoriques de longueurs (a,b,c) et d'angles $(\alpha,\beta,\gamma)$ définissant la maille du cristal afin de minimiser l'écart quadratique moyen entre le diffractogramme expérimental et le diffractogramme théorique. Une autre variante de segmentation du diffractogramme met en œuvre un apprentissage machine qui permet de distinguer deux classes, respectivement la classe de « pic de diffraction » et la classe de « fond ».

Par exemple, l'apprentissage machine est effectué avec un algorithme de type forêt aléatoire rapide « fast random forest », décrit dans l'article de Leo Breiman (2001). « Random Forests », publié dans Machine Learning. 45(1):5-32).

En variante, d'autres algorithmes de classification par apprentissage machine peuvent être mis en œuvre, par exemple de type Bayesien, ou à base de fonctions, ou à base de règles, ou une combinaison de tels algorithmes, ou à base de toute la palette d'outils utilisés en classification par apprentissage machine tels que le « deep learning » par exemple. Cette segmentation par apprentissage machine permet de conserver uniquement les pics fréquentiels importants et d'éliminer sélectivement les informations indésirables du diffractogramme.

L'option la plus détaillée pour extraire la distribution des gouttes consiste à masquer le diffractogramme des composantes avec un masque qui est le maximum du (A) diffractogramme théorique ajusté normalisé entre 0 et 1, et du (B) résultat de segmentation par apprentissage machine normalisé entre 0 et 1 de la transformée de Fourier du pavé des gouttes.

C'est la simulation atomistique des images théoriques « parfaites » qui permet de vérifier que les paramètres de traitement d'images permettent de converger vers la forme théorique parfaite, pour chaque cristal, chaque orientation et chaque jeu de paramètres instrumentaux.

Le procédé comporte ensuite les étapes suivantes, répétées pour chaque pavé de gouttes.

En au moins un sous-ensemble de points P du pavé de gouttes, chaque point P ayant des coordonnées Xp= (x1_p,x2_p,...,xN_p), le procédé met en œuvre un calcul 36 d'un tenseur de structure fonction des valeurs de gradients directionnels, chaque direction correspondant à une dimension de l'espace de représentation à N dimensions.

En géométrie différentielle, le tenseur de structure ou matrice des seconds moments est classiquement défini par une matrice dérivée du gradient d'une fonction, décrivant la distribution du gradient dans un voisinage spécifiée autour d'un point. Le gradient est orienté vers la direction de la plus grande variation du champ scalaire. Le tenseur de structure est utilisé en traitement d'images et permet d'analyser l'anisotropie locale autour d'un point donné en estimant les directions prédominantes du gradient au voisinage de ce point.

Pour N=2, le champ de tenseurs de structure d'une image est généralement défini comme le champ des matrices de covariances locales des dérivées premières partielles de cette image. Il est construit à partir des champs de gradients préalablement estimés par convolution linéaire, ce qui conduit à la formule mathématique suivante :

[MATH 1]

$$J(X_p) = \begin{bmatrix} (w * f_{x_1}^2)(X_p) & (w * f_{x_1} f_{x_2})(X_p) \\ (w * f_{x_1} f_{x_2})(X_p) & (w * f_{x_2}^2)(X_p) \end{bmatrix}$$

Où $f_{x_1}$ est la dérivée partielle selon la première dimension, $f_{x_2}$ est la dérivée partielle selon la deuxième dimension, et w() est une fenêtre d'observation isotropique, centrée en P, avec une noyau de pondération généralement gaussien. Le symbole '*' désigne l'opération de convolution.

Ce lissage spatial par convolution permet de rendre le tenseur de structure plus robuste au bruit. Le choix de l'extension spatiale de ce lissage est donc déterminant pour obtenir le meilleur compromis entre précision et robustesse au bruit. Le champ de tenseurs de structure a généralement la même taille que le pavé de données, sauf pour les bords où le calcul par convolution n'est pas possible. Par contre il s'agit d'un champ à valeurs matricielles.

Ainsi, dans un mode de réalisation, le sous-ensemble de points P est par exemple le sous-ensemble de points qui contient tous les points P du pavé de gouttes pour lesquels le calcul de tenseur de structure est possible (i.e calcul par convolution possible).

En 3 dimensions, la formule [MATH 1] devient :

[MATH 2]

$$J(X_p) = \begin{bmatrix} (w * f_{x_1}^2)(X_p) & (w * f_{x_1} f_{x_2})(X_p) & (w * f_{x_1} f_{x_3})(X_p) \\ (w * f_{x_1} f_{x_2})(X_p) & (w * f_{x_2}^2)(X_p) & (w * f_{x_2} f_{x_3})(X_p) \\ (w * f_{x_1} f_{x_3})(X_p) & (w * f_{x_2} f_{x_3})(X_p) & (w * f_{x_3}^2)(X_p) \end{bmatrix}$$

La généralisation de la formule [MATH 2] à N dimensions, avec N>3, est analogue, en calculant le champ des matrices de covariances locales des dérivées premières partielles dans les hyperespaces correspondants.

Par la suite, les formules sont données pour N=2, la généralisation à N>2 étant à la portée de l'homme du métier.

Par exemple, dans un mode de réalisation, les dérivées partielles sont obtenues par calcul de gradients directionnels, selon chacune des dimensions de l'espace.

Le tenseur de structure est défini par la matrice de [MATH 1], appliquée avec les valeurs des gradients directionnels dans chaque direction.

Le voisinage de points pris en considération est par exemple défini par un nombre $N_0$ de points voisins autour du point P considéré dans chaque direction.

Par exemple, $N_0$ est choisi en fonction de la distance minimale entre deux gouttes voisines pour une structure de maille cristalline donnée.

Dans un mode de réalisation, $N_0$ est compris entre la moitié et dix fois la distance médiane entre gouttes voisines.

Le procédé comporte également une étape 38 de calcul d'une ou plusieurs valeurs caractéristiques du tenseur de structure.

Dans un mode de réalisation, cette étape de calcul de valeurs caractéristiques du tenseur de structure comprend plusieurs sous-étapes.

Ainsi, l'étape de calcul 38 comprend une sous-étape 40 de calcul des valeurs propres de la matrice de tenseur de structure associée au point P considéré.

Dans le cas où N=2, le tenseur de structure en chaque point P considéré est une matrice 2x2, qui comporte deux valeurs propres associées, qui sont calculées analytiquement.

Les valeurs propres du tenseur de structure associé au point P considéré sont notées respectivement $\lambda_1(p)$ et $\lambda_2(p)$.

Les valeurs propres permettent d'obtenir des informations sur la distribution du gradient dans la fenêtre w, et pour discriminer entre régions à gradient directionnel, régions uniformes ou régions à symétrie rotationnelle.

Les valeurs propres sont mémorisées à la sous-étape 40.

De plus, le procédé comprend une sous-étape 42 de calcul d'une valeur d'énergie associée au tenseur de structure, en appliquant la formule suivante :

[MATH 3]

$$E_p = |\lambda_1(p)| + |\lambda_2(p)|$$

L'énergie d'un tenseur de structure, définie comme la somme de ses valeurs propres caractérise la dynamique. L'énergie du tenseur en un point exprime le contraste local au voisinage de ce point. (J. Angulo. Structure Tensor Image Filtering using Riemannian L1 and L∞ Center-of-mass. Image Analysis and Stereology, vol. 33, no. 2, pp. 95-105, 2014.)

Si l'énergie est proche de 0, le point P appartient à une région homogène.

La valeur d'énergie associée au point considéré est mémorisée.

Le procédé comprend également une sous-étape 44 de calcul de la cohérence associée, la cohérence étant définie par la différence entre la valeur propre maximale et la valeur propre minimale divisée par la somme de la valeur propre maximale et de la valeur propre minimale. La cohérence est également appelée facteur de confiance ou indicateur de dispersion. La cohérence représente une mesure de l'anisotropie locale et caractérise la dispersion de l'orientation du gradient c'est-à-dire la variabilité locale de la géométrie de l'image.

Soit $\lambda_{max}(p)=\max(\lambda_1(p), \lambda_2(p))$ la valeur propre maximale et $\lambda_{min}(p)=\min(\lambda_1(p),\lambda_2(p))$ la valeur propre minimale, la formule pour calculer la cohérence est :

[MATH 4]

$$C_p = \frac{\lambda_{max}(p) - \lambda_{min}(p)}{\lambda_{max}(p) + \lambda_{min}(p)}$$

La valeur de cohérence associée au point considéré est mémorisée.

L'étape de calcul 38 comprend en outre une sous-étape 46 de calcul d'une orientation associée au point considéré, à partir des composantes du tenseur de structure. La méthode calcul de l'orientation est par exemple décrite dans la publication suivante : I. L. Dryden, A. Koloydenko and D. Zhou. Non-Euclidean Statistics for Covariance Matrices, with Applications to Diffusion Tensor Imaging. The Annals of Applied Statistics, vol. 3, no. 3, pp. 1102-1123, 2009.

La valeur d'orientation associée au point considéré est mémorisée.

L'étape de calcul 38 comprend en outre une sous-étape 48 de calcul d'une valeur d'indice de Harris au point P et/ou le calcul d'une valeur d'indice de Harris-Laplace au point P. L'indice de Harris, connu dans le domaine du traitement d'images, est utilisé pour la détection de coins dans les images numériques. De même, le calcul de l'indice de Harris-Laplace est connu en traitement d'images. Les valeurs d'indice de Harris et/ou de Harris-Laplace sont mémorisées.

Ainsi, à l'issue de l'étape 38 de calcul de valeurs caractéristiques du tenseur de structure est formé (étape 50) un tenseur de signature associé au point P considéré, dont les composantes sont des valeurs caractéristiques préalablement calculées.

Dans un mode de réalisation, les caractéristiques du tenseur de structure retenues dans le tenseur de signature comprennent : les valeurs de gradients selon chacune des dimensions, les valeurs propres du tenseur de structure, la valeur d'énergie, la valeur de cohérence, la valeur d'orientation, la valeur d'indice de Harris, les valeurs de l'indice de Harris-Laplace.

Selon des variantes, les caractéristiques du tenseur de structure retenues dans le tenseur de signature comprennent un sous-ensemble d'une ou plusieurs caractéristiques mentionnées ci-dessus.

Il est à noter que dans une telle variante, certaines sous-étapes de calcul ne sont pas effectuées, par exemple si la valeur d'énergie n'est pas retenue parmi les composantes du tenseur de signature, la sous-étape de calcul et mémorisation de la valeur d'énergie n'est pas effectuée.

Les étapes 38 à 50 sont répétées pour chaque point du sous-ensemble de points considéré.

Ainsi, pour chaque pavé de gouttes considéré, un tenseur de signature associé est obtenu et mémorisé.

Après le traitement de l'ensemble des points considérés, le procédé comprend une étape 52 d'obtention d'un pavé de signatures, associé au pavé de gouttes, réunissant les tenseurs de signature associés aux points P du pavé de gouttes considérés.

Ce pavé de signatures est fourni en entrée d'une étape 54 de détection et localisation de défaut(s).

L'étape 54 met en œuvre une méthode de classification du pavé de signatures dans une ou plusieurs catégories de défauts. La méthode de classification est supervisée, semi-supervisée ou autonome par apprentissage machine préalable effectué à partir d'une famille la plus exhaustive possible de défauts provenant de pavés de données simulés, pour des structures cristallines théoriques.

Par exemple, l'apprentissage machine est effectué avec un algorithme de type forêt aléatoire rapide « fast random forest », décrit dans l'article de Leo Breiman (2001). « Random Forests », publié dans Machine Learning. 45(1):5-32).

En variante, d'autres algorithmes de classification par apprentissage machine peuvent être mis en œuvre, par exemple de type Bayesien, ou à base de fonctions, ou à base de règles, ou une combinaison de tels algorithmes, ou à base de toute la palette d'outils utilisés en classification par apprentissage machine.

Selon une autre variante, la méthode de classification choisie met en œuvre un réseau de neurones, entraîné par apprentissage supervisé, par exemple un réseau de neurones convolutif CNN (pour « Convolutional Neural Networks »). L'apprentissage peut aussi s'effectuer par un apprentissage profond, mais cette variante est plus coûteuse en temps de calcul.

Ainsi, à partir du pavé de signatures, le cas échéant, est obtenue en sortie un type (ou classe) de défaut, et une localisation associée.

En cas de détection de défaut, une information relative à la présence de défaut et à sa localisation est fournie, par exemple sur une cartographie qui est affichée sur une interface homme-machine à destination d'un opérateur.

En variante ou en complément, l'information relative à la présence de défaut et à sa localisation est fournie à une application logicielle de contrôle, pour prise d'action ultérieures, par exemple levée d'alerte. Cela permet par exemple d'éliminer des matériaux présentant des défauts avant leur utilisation dans un procédé de fabrication dispositifs à base de tels matériaux. Ces informations sont également précieuses pour établir des liens entre les procédés d'élaboration des matériaux et la défectivité résultante, dans une logique d'optimisation séquentielle.

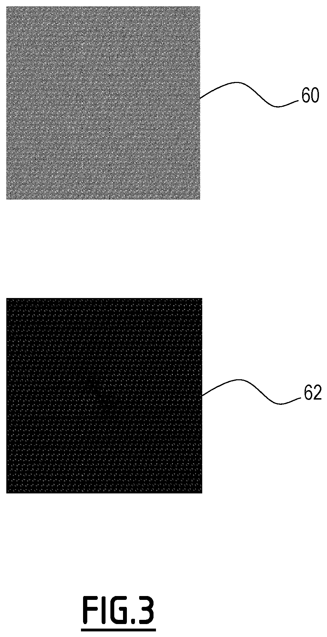

A titre d'exemple, la **figure 3** illustre, par des données obtenues par simulation, un pavé d'entrée pour N=2, i.e. un pavé d'image numérique 60 et le pavé de gouttes 62 correspondant, qui est également une image numérique de gouttes 62, après application de l'étape de transformation 34.

Le pavé de gouttes 62 comprend une dislocation localisée au centre, particulièrement difficile à déceler (dislocation vis). Aucune méthode de l'état de l'art ne permettait de la déceler auparavant.

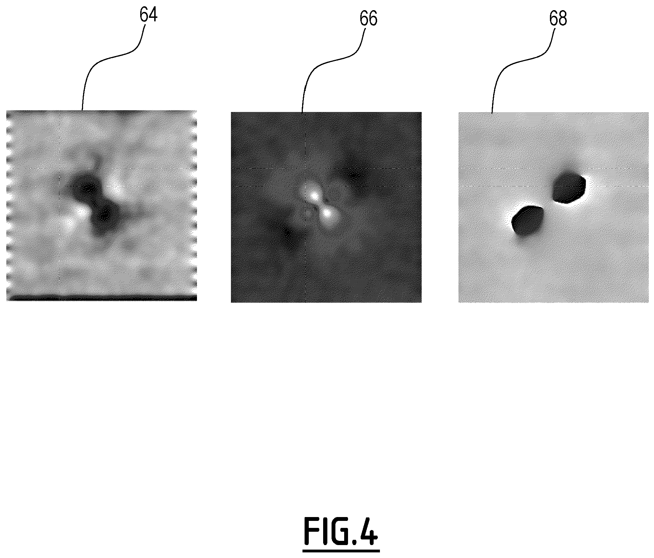

La **figure 4** illustre une image 64 des valeurs d'énergie 64 obtenues par le calcul de la sous-étape de calcul 42 sur tous les points de l'image numérique de gouttes 62 ; les valeurs de cohérence, réunies en une image de cohérence normalisée 66, obtenues par le calcul de la sous-étape de calcul 44 sur tous les points de l'image numérique de gouttes 62 ; les valeurs d'orientation, réunies en une image d'orientation normalisée 68, obtenues par le calcul de la sous-étape de calcul 46 sur tous les points de l'image numérique de gouttes 62.

Ainsi, il ressort clairement que les caractéristiques d'énergie, de cohérence et d'orientation des tenseurs de structure indiquent une présence de structure non homogène (i.e. ici une dislocation), dans une région spatiale bien délimitée, et permettent de localiser la dislocation, même si celle-ci est quasiment invisible dans l'image de départ.

Avantageusement, le calcul d'un tenseur de structure et des caractéristiques du tenseur de structure est rapide et peu complexe, ce qui permet d'accélérer les calculs et de diminuer la quantité de ressources calculatoires nécessaires. Ce calcul permet avantageusement de rendre visibles des défauts jusqu'ici non détectés par les techniques usuelles.

Avantageusement, le cumul de plusieurs caractéristiques dans un pavé de signatures permet une caractérisation précise des dislocations de tout type (vis ; coin, mixte, fautes d'empilement, etc.).

Une solution alternative qui ne fait pas l'objet de l'application courante est de remplacer le calcul de gradient par des différentielles d'ordre plus élevé, par exemple une combinaison linéaire de dérivées partielles d'ordre n, ce qui est plus complexe d'un point de vue calculatoire, mais permet de caractériser des fluctuations de structures plus complexes.

Avantageusement, une très bonne précision spatiale de localisation des dislocations est obtenue par le procédé proposé, typiquement picométrique. La méthode présente une sensibilité exceptionnelle et s'applique à tous les défauts qui induisent une déformation locale de la structure cristalline.

**Revendications**

**1.** Procédé de traitement de données multidimensionnelles représentatives d'un échantillon de matériau cristallin pour la localisation de défauts dans ledit échantillon de matériau cristallin, comportant une acquisition d'au moins une image formant un pavé de données d'entrée, la ou chaque image dudit pavé de données d'entrée étant représentative d'une partie dudit l'échantillon, ledit pavé de données d'entrée étant représenté dans un espace à N dimensions, N étant supérieur ou égal à deux, chaque donnée dudit pavé correspondant à un point de l'espace à N dimensions, le procédé comportant une

- transformation (34) dudit pavé de données d'entrée pour obtenir un pavé de gouttes représentatives d'une structure atomique de l'échantillon observé, et étant **caractérisé en ce qu'**il comporte en outre des étapes de :
- en au moins un sous-ensemble de points dudit pavé de gouttes,

∘ calcul (36) d'un tenseur de structure fonction des valeurs de gradients directionnels, autour de chaque point P dudit sous-ensemble du pavé de gouttes,
∘ calcul (38) d'une ou plusieurs valeurs caractéristiques du tenseur de structure,
∘ formation (50) d'un tenseur de signature associé au sous-ensemble de points P du pavé de gouttes, le tenseur de signature ayant pour composantes lesdites valeurs caractéristiques de tenseur de structure ;

- obtention (52) d'un pavé de signatures correspondant audit pavé de gouttes, ledit pavé de signatures réunissant les tenseurs de signature associés aux points P dudit pavé de gouttes;
- détection et localisation (54) d'un défaut par application d'une méthode de classification par apprentissage machine audit pavé de signatures.

2. Procédé selon la revendication 1, dans lequel lesdites valeurs caractéristiques d'un tenseur de structure sont choisies parmi des gradients dans chaque direction, les valeurs propres du tenseur de structure, l'énergie du tenseur de structure, la cohérence du tenseur de structure, l'orientation du tenseur de structure, l'indice de Harris du tenseur de structure, l'indice de Harris-Laplace du tenseur de structure.

3. Procédé selon l'une des revendications 1 ou 2, dans lequel la méthode de classification appliquée est une méthode mise au point par apprentissage machine supervisé, semi-supervisé ou autonome après apprentissage préalable sur des pavés de signatures calculés sur des défauts simulés.

4. Procédé selon l'une des revendications 1 à 3, dans lequel ledit voisinage est défini par un nombre de points compris entre la moitié et dix fois la distance médiane entre gouttes voisines.

5. Procédé selon l'une quelconque des revendications 1 à 4, comportant un calcul (40) des valeurs propres de ladite matrice, et une détermination de la valeur propre minimale, de la valeur propre maximale, lesdites valeurs propres minimale et maximale étant mémorisées.

6. Procédé selon la revendication 5, comportant en outre un calcul d'énergie (42), l'énergie étant égale à la somme des valeurs absolues desdites valeurs propres, un calcul de cohérence (44), la cohérence étant égale à la différence entre la valeur propre maximale et la valeur propre minimale divisée par la somme de la valeur propre maximale et de la valeur propre minimale, lesdites caractéristiques du tenseur de structure comportant la valeur propre minimale, la valeur propre maximale, l'énergie et la cohérence.

7. Procédé selon l'une des revendications 1 à 6, comportant en outre un calcul (46) d'orientation en fonction du tenseur de structure.

8. Procédé selon l'une quelconque des revendications 1 à 7, comportant en outre un calcul (48) d'indice de Harris et/ou d'indice de Harris-Laplace par application d'un opérateur de calcul sur les valeurs du tenseur de structure.

9. Programme d'ordinateur comportant des instructions logicielles qui, lorsqu'elles sont exécutées par un dispositif électronique programmable, mettent en œuvre un procédé de traitement de données multidimensionnelles représentatives d'un échantillon de matériau cristallin pour la localisation de défauts dans ledit échantillon de matériau cristallin conforme aux revendications 1 à 8.

10. Dispositif de traitement de données multidimensionnelles représentatives d'un échantillon de matériau cristallin pour la localisation de défaut(s) dans l'échantillon de matériau cristallin, configuré pour acquérir au moins une image de microscopie formant un pavé de données d'entrée, la ou chaque image dudit pavé étant représentative d'une partie de l'échantillon observé, ledit pavé de données d'entrée étant représenté dans un espace à N dimensions, N étant supérieur ou égal à deux, chaque donnée dudit pavé correspondant à un point de l'espace à N dimensions, le dispositif comportant un processeur de calcul configuré pour mettre en œuvre:

- un module (20) de transformation dudit pavé de données d'entrée pour obtenir un pavé de gouttes représentatives d'une structure atomique de l'échantillon observé,
- le dispositif étant **caractérisé en outre en ce que** le processeur de calcul est configuré pour :

- appliquer, en au moins un sous-ensemble de points dudit pavé de gouttes,

∘ un module (22) de calcul d'un tenseur de structure fonction des valeurs de gradients directionnels, autour de chaque point P dudit sous-ensemble du pavé de gouttes,

◦ un module (24) de calcul d'une ou plusieurs valeurs caractéristiques du tenseur de structure,

◦ un module (24) de formation d'un tenseur de signature associé au sous-ensemble de points P du pavé de gouttes, le tenseur de signature ayant pour composantes lesdites valeurs caractéristiques de tenseur de structure,

- un module (26) d'obtention d'un pavé de signatures correspondant audit pavé de gouttes, ledit pavé de signatures réunissant les tenseurs de signatures associés aux points P dudit pavé de gouttes ;

- un module (28) de détection et localisation d'un défaut par application d'une méthode de classification par apprentissage machine audit pavé de signatures.

## Patentansprüche

1. Verarbeitungsverfahren mehrdimensionaler Daten, die repräsentativ für eine Probe aus kristallinem Material sind, zur Lokalisierung von Defekten in der Probe aus kristallinem Material, umfassend eine Erfassung von mindestens einem Bild, das einen Block von Eingangsdaten bildet, wobei das oder jedes Bild des Eingangsdatenblocks repräsentativ für einen Teil der Probe ist, wobei der Eingangsdatenblock in einem N-dimensionalen Raum dargestellt ist, wobei N größer als oder gleich wie zwei ist, wobei jede Daten des Blocks einem Punkt in dem N-dimensionalen Raum entspricht, das Verfahren umfassend eine

   - Transformation (34) des Eingangsdatenblocks, um einen Block von Tropfen zu erlangen, die repräsentativ für eine atomare Struktur der beobachteten Probe sind, und **dadurch gekennzeichnet, dass** es ferner die folgenden Schritte umfasst:
   - in mindestens einer Teilmenge von Punkten des Tropfenblocks,

     ◦ Berechnen (36) eines Strukturtensors abhängig von den Werten von Richtungsgradienten um jeden Punkt P der Teilmenge des Tropfenblocks,
     ◦ Berechnen (38) eines oder mehrerer charakteristischer Werte des Strukturtensors,
     ◦ Bilden (50) eines Signaturtensors, der mit der Teilmenge von Punkten P des Tropfenblocks assoziiert ist, wobei der Signaturtensor die charakteristischen Werte des Strukturtensors als Komponenten aufweist;

   - Erlangen (52) eines Signaturblocks, der dem Tropfenblock entspricht, wobei der Signaturblock die Signaturtensoren, die mit den Punkten P des Tropfenblocks assoziiert sind, zusammenfasst;
   - Erkennen und Lokalisieren (54) eines Fehlers durch Anwenden einer Klassifizierungsmethode durch maschinelles Lernen auf den Signaturblock.

2. Verfahren nach Anspruch 1, wobei die charakteristischen Werte eines Strukturtensors ausgewählt sind aus Gradienten in jeder Richtung, Eigenwerten des Strukturtensors, Energie des Strukturtensors, Kohärenz des Strukturtensors, Ausrichtung des Strukturtensors, Harris-Index des Strukturtensors, Harris-Laplace-Index des Strukturtensors.

3. Verfahren nach einem der Ansprüche 1 oder 2, wobei die angewandte Klassifizierungsmethode eine Methode ist, die durch überwachtes, halbüberwachtes oder autonomes maschinelles Lernen nach vorherigem Lernen auf Signaturblöcken entwickelt wird, die auf simulierten Defekten berechnet werden.

4. Verfahren nach einem der Ansprüche 1 bis 3, wobei die Nachbarschaft durch eine Anzahl von Punkten definiert ist, die zwischen dem halben und dem zehnfachen des mittleren Abstands zwischen benachbarten Tropfen ist.

5. Verfahren nach einem der Ansprüche 1 bis 4, umfassend ein Berechnen (40) von Eigenwerten der Matrix und ein Bestimmen des minimalen Eigenwerts, des maximalen Eigenwerts, wobei die minimalen Eigenwerte und die maximalen Eigenwerte gespeichert werden.

6. Verfahren nach Anspruch 5, ferner umfassend eine Energieberechnung (42), wobei die Energie gleich wie die Summe der Absolutwerte der Eigenwerte ist, eine Konsistenzberechnung (44), wobei die Kohärenz gleich wie die Differenz zwischen dem maximalen Eigenwert und dem minimalen Eigenwert geteilt durch die Summe des maximalen Eigenwerts und des minimalen Eigenwerts ist, wobei die Merkmale des Strukturtensors den minimalen Eigenwert, den maximalen Eigenwert, die Energie und die Kohärenz umfassen.

7. Verfahren nach einem der Ansprüche 1 bis 6, ferner umfassend eine Berechnung (46) der Ausrichtung abhängig von dem Strukturtensor.

8. Verfahren nach einem der Ansprüche 1 bis 7, ferner umfassend ein Berechnen (48) des Harris-Index und/oder des Harris-Laplace-Index durch Anwenden eines Berechnungsoperators auf die Werte des Strukturtensors.

9. Computerprogramm, umfassend Softwareanweisungen, die, wenn sie von einer programmierbaren elektronischen Vorrichtung ausgeführt werden, ein Verarbeitungsverfahren mehrdimensionaler Daten, die repräsentativ für eine Probe eines kristallinen Materials sind, zur Lokalisierung von Defekten in der Probe des kristallinen Materials gemäß den Ansprüchen 1 bis 8 implementieren.

10. Verarbeitungsvorrichtung mehrdimensionaler Daten, die repräsentativ für eine Probe aus kristallinem Material sind, zur Lokalisierung von Defekt(en) in der Probe aus kristallinem Material, die konfiguriert ist, um mindestens ein Mikroskopiebild zu erfassen, das einen Eingangsdatenblock bildet, wobei das oder jedes Bild des Blocks repräsentativ für einen Teil der beobachteten Probe ist, wobei der Eingangsdatenblock in einem N-dimensionalen Raum dargestellt ist, wobei N größer als oder gleich wie zwei ist, wobei jede Daten des Blocks einem Punkt des N-dimensionalen Raums entspricht, wobei die Vorrichtung einen Rechenprozessor umfasst, der konfiguriert ist, um Folgendes zu implementieren:

- ein Modul (20) zur Transformation des Eingangsdatenblocks, um einen Block von Tropfen zu erlangen, die repräsentativ für eine atomare Struktur der beobachteten Probe sind,
- wobei die Vorrichtung ferner **dadurch gekennzeichnet ist, dass** der Rechenprozessor zu Folgendem konfiguriert ist:
- Anwenden, an mindestens einer Teilmenge von Punkten des Tropfenblocks,

  ◦ eines Moduls (22) zum Berechnen eines Strukturtensors abhängig von den Werten von Richtungsgradienten um jeden Punkt P der Teilmenge des Tropfenblocks,
  ◦ eines Moduls (24) zum Berechnen eines oder mehrerer charakteristischer Werte des Strukturtensors,
  ◦ eines Moduls (24) zum Bilden eines Signaturtensors, der mit der Teilmenge von Punkten P des Tropfenblocks assoziiert ist, wobei der Signaturtensor die charakteristischen Werte des Strukturtensors als Komponenten aufweist,

- eines Moduls (26) zum Erlangen eines Signaturblocks, der dem Tropfenblock entspricht, wobei der Signaturblock die Signaturtensoren, die mit den Punkten P des Tropfenblocks assoziiert sind, zusammenfasst;
- eines Moduls (28) zum Erkennen und Lokalisieren eines Fehlers durch Anwenden einer Klassifizierungsmethode durch maschinelles Lernen auf den Signaturblock.

## Claims

1. Method for processing multidimensional data representative of a sample of crystalline material for the location of defects in said sample of crystalline material, comprising an acquisition of at least one image forming an input data cube, the or each image of said input data cube being representative of a part of said sample, said input data cube being represented in an N-dimensional space, where N is greater than or equal to two, each data item of said cube corresponding to a point in the N-dimensional space, the method comprising a

   - transformation (34) of said input data cube to obtain a block of drops representative of an atomic structure of the observed sample, and **characterised in that** it further comprises the following steps:
   - in at least one subset of points of said block of drops,

     ◦ calculation (36) of a structure tensor based on the values of directional gradients, around each point P of said subset of the block of drops,
     ◦ calculation (38) of one or more characteristic values of the structure tensor,
     ◦ formation (50) of a signature tensor associated with the subset of points P of the block of drops, the signature tensor having as components said characteristic values of the structure tensor;

   - obtaining (52) of a signature block corresponding to said block of drops, said signature block combining the signature tensors associated with the points P of said block of drops;
   - detection and location (54) of a defect by application of a machine learning classification method to said signature block.

2. Method according to claim 1, wherein said characteristic values of a structure tensor are selected from gradients in each direction; the eigenvalues of the structure tensor, the energy of the structure tensor, the coherence of the structure tensor, the orientation of the structure tensor, the Harris index of the structure tensor, and the Harris-Laplace index of the structure tensor.

3. Method according to one of claims 1 or 2, wherein the classification method applied is a method developed by supervised, semi-supervised or autonomous machine learning following prior learning on signature blocks calculated on simulated defects.

4. Method according to one of claims 1 to 3, in which said vicinity is defined by a number of points between half and ten times the median distance between neighbouring drops.

5. Method according to any one of claims 1 to 4, comprising a calculation (40) of the eigenvalues of said matrix, and a determination of the minimum eigenvalue and the maximum eigenvalue, said minimum and maximum eigenvalues being stored.

6. Method according to claim 5, further comprising an energy calculation (42), the energy being equal to the sum of the absolute values of said eigenvalues, a coherence calculation (44), the coherence being equal to the difference between the maximum eigenvalue and the minimum eigenvalue divided by the sum of the maximum eigenvalue and the minimum eigenvalue, said characteristics of the structure tensor comprising the minimum eigenvalue, the maximum eigenvalue, the energy and the coherence.

7. Method according to one of claims 1 to 6, further comprising a calculation (46) of orientation based on the structure tensor.

8. Method according to any one of claims 1 to 7, further comprising a calculation (48) of a Harris index and/or a Harris-Laplace index by application of a calculation operator to the values of the structure tensor.

9. Computer program comprising software instructions which, when executed by a programmable electronic device, implement a method of processing multidimensional data representative of a sample of crystalline material for the location of defects in said sample of crystalline material according to claims 1 to 8.

10. Device for processing multidimensional data representative of a sample of crystalline material for the location of defects in the sample of crystalline material, configured to acquire at least one microscopy image forming an input data cube, the or each image of said cube being representative of a part of the observed sample, said input data cube being represented in an N-dimensional space, where N is greater than or equal to two, each data item of said cube corresponding to a point in the N-dimensional space, the device comprising a calculation processor configured to implement:

   - a module (20) for the transformation of said input data cube to obtain a block of drops representative of the atomic structure of the observed sample,
   - the device being further **characterised in that** the calculation processor is configured to:
   - apply in at least one subset of points of said block of drops,

      ◦ a module (22) for the calculation of a structure tensor based on the values of directional gradients, around each point P of said subset of the block of drops,
      ◦ a module (24) for the calculation of one or more characteristic values of the structure tensor,
      o a module (24) for the formation of a signature tensor associated with the subset of points P of the block of drops, with the signature tensor having as components said characteristic values of the structure tensor,

   - a module (26) for obtaining a signature block corresponding to said block of drops, said signature block combining the signature tensors associated with the points P of said block of drops;
   - a module (28) for the detection and location of a defect by application of a machine learning classification method to said signature block.

FIG.1

FIG.2

60

62

# FIG.3

64

66

68

# FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3118256

**Littérature non-brevet citée dans la description**

- **LEO BREIMAN**. Random Forests. *Machine Learning*, 2001, vol. 45 (1), 5-32
- Dynamic Thresholding of Grey-Level Images. *Proc. of the 8th Int. Conf. on Pattern Recognition*, 1986
- **K.-J. OH** ; **S. YEA** ; **Y.-S. HO**. Hole filling method using depth based inpainting for view synthesis in free viewpoint television and 3- D video. *Proc. Picture Coding Symp*, May 2009
- **LEO BREIMAN**. Random Forests. *Machine Learning.*, 2001, vol. 45 (1), 5-32
- **J. ANGULO**. Structure Tensor Image Filtering using Riemannian L1 and L∞ Center-of-mass. *Image Analysis and Stereology*, 2014, vol. 33 (2), 95-105
- **I. L. DRYDEN** ; **A. KOLOYDENKO** ; **D. ZHOU**. Non-Euclidean Statistics for Covariance Matrices, with Applications to Diffusion Tensor Imaging. *The Annals of Applied Statistics*, 2009, vol. 3 (3), 1102-1123